# EUROPEAN PATENT APPLICATION

(11) **EP 4 542 689 A2**
(43) Date of publication of application: **23.04.2025**
(21) Application number: 24206135.6
(22) Date of filing: 11.10.2024
(51) Int. Cl.: H01M 4/66

(54) **ELECTRODE MATERIAL FOR A SECONDARY BATTERY AND METHOD OF MANUFACTURING THE SAME**

(30) Priority: 18.10.2023 KR 20230139484
(71) Applicant: IRM Co., Ltd., Ansan-si, Gyeonggi-do (KR)
(72) Inventor: CHOI, Yu Kyoung, Yongm-si, Gyeonggi-do (KR)
(74) Representative: M. Zardi & Co S.A.

(57) **Abstract**

Disclosed are an electrode material for a secondary battery and a method of manufacturing the electrode material, capable of reducing lithium side reactions, simplifying processes, and reducing cracks caused by external impact. The electrode material for a secondary battery includes a bonding sheet, an active material layer, and a current collector. The bonding sheet includes a plurality of through-holes penetrating first and second surfaces opposite to each other. The active material layer includes a first layer covering the first surface, a second layer covering the second surface, and a connecting layer formed inside the through-holes to connect the first layer and the second layer. The current collector is attached to the second layer.

## Description

### CROSS REFERENCE TO RELATED APPLICATION

This application claims priority from and the benefit of Korean Patent Applications No. 10-2023-0139484, filed on October 18, 2023, which is hereby incorporated by reference for all purposes as if fully set forth herein.

### BACKGROUND OF THE INVENTION

### FIELD OF THE INVENTION

The present invention relates to an electrode material for a secondary battery and a method of manufacturing the same.

### DISCUSSION OF THE BACKGROUND

Currently, as the information age becomes more advanced, mobile electronic devices carried by individuals are widely used. These mobile electronic devices inevitably require batteries to operate.

In the past, primary batteries such as manganese batteries and alkaline batteries were mainly used, which were used once and discarded when discharged. However, recently, secondary batteries, which can be recharged after discharge and used repeatedly, are being widely used instead of primary batteries, which are disadvantageous in terms of environmental pollution of waste batteries and cost thereof.

These secondary batteries are generally composed of a positive electrode material, a negative electrode material, an electrolyte, and a separator. Among these, the positive electrode material and the negative electrode material are the most important materials that determine the capacity, lifespan, and charging speed of the battery. The positive electrode material is a lithium ion source and determines the capacity and average voltage of the battery, and the negative electrode material determines the charging speed and lifespan.

In order to manufacture electrode materials such as an positive electrode material or a negative electrode material, in Korean Patent Publication No. 10-2006-0025230, "dry particle based electro-chemical device and method of manufacturing the same", when a dry active material and a dry binder are mixed at room temperature to form a matrix of the dry active material, a jet mill is used to perform dry fiberization including fluororesin such as PTFE and PVDF through a high-temperature process, to thereby develop a dry active material sheet. However, although PTFE has an advantage in fiberization for forming an active material sheet, lithium resistance increases due to a side reaction during lithium charge and discharge.

To solve this problem, Korean Patent Publication No. 10-2016-0145043, "dry energy storage device electrode and method of manufacturing the same" used a composite binder including PTFE and PVDF or a copolymer, and Korean Patent Publication No. 1 0-2022-0100240, "dry binder and electrode for lithium secondary battery including the same and method for manufacturing the same" used a mixture of PTFE and CMC or PAA to minimize the resistance of lithium.

In order to minimize such side reaction of the active material, PVDF, CMC, PAA, etc. are added to PTFE to suppress the side reaction, but on the other hand, the fiberization structure is not satisfactory. In other words, the compositional force for shear force is strong, but as a result, a side reaction (increased resistance) of lithium occurs, resulting in degradation of the battery.

### SUMMARY OF THE INVENTION

Therefore, the present invention provides an electrode material for a secondary battery and a method of manufacturing the electrode material capable of reducing a side reaction of lithium, simplifying a manufacturing process, and reducing cracks caused by external impact.

An electrode material for a secondary battery according to an exemplary embodiment of the present invention includes a binding sheet, an active material layer and a current collector. The binding sheet includes a plurality of through-holes penetrating the first surface and the second surface, which are opposite to each other. The active material layer includes a first layer covering the first surface, a second layer covering the second surface, and a connecting layer formed inside the through-hole and connecting the first layer and the second layer. The current collector is attached to the second layer.

In one embodiment, the binding sheet may be one of a woven fabric, a knitted fabric, a non-woven fabric, and a film.

In one embodiment, an electrolyte absorbency of the binding sheet may be in a range of about 1.2cc/g to about 1.8cc/g.

In one embodiment, the binding sheet may be cotton, synthetic fiber, or a combination thereof.

In one embodiment, the binding sheet may include at least one of PVDF (polyvinylidene fluoride), PTFE (polytetrafluoroethylene), PP (polypropylene), PE (polyethylene), PVC (polyvinyl chloride), nylon, cotton, and synthetic fiber.

In one embodiment, the binding sheet may include one of PVDF (polyvinylidene fluoride) and PTFE (polytetrafluoroethylene), and the binding sheet may be treated with a sodium naphthalene solution.

In one embodiment, a size of the through-hole may be in a range of about 1mm to about 10mm.

In one embodiment, thickness of the first layer and thickness of the second layer may be substantially the same, and a ratio of the thickness of the first layer and thickness of the binding sheet is in a range of about 0.5: 1 to about 1:1.

In one embodiment, the active material layer may include an active material particle and a binder.

In one embodiment, the active material particle may include at least one of carbon, silicon, tin, antimony, and graphene.

In one embodiment, the current collector may be copper (Cu) foil.

In one embodiment, the active material particle may be a positive electrode material including one of aluminum (Al), nickel (Ni), titanium (Ti), tungsten (W), iron (Fe), chromium (Cr), alloys thereof, and combinations thereof.

In one embodiment, the current collector may be aluminum (Al) foil.

In one embodiment, the binder may include at least one of PVDF (polyvinylidene fluoride), elastomer, SBR (styrene butadiene rubber), CMC (carboxy methylcellulose), NBR (nitrile butadiene rubber), butadiene, PAA (polyacrylic acid).

In one embodiment, when a diameter of the active material particle is about 10µm or less, a size of the through-hole may be in a range of about 1mm to about 5mm, and when a diameter of the active material particle is about 10µm to about 30µm, a size of the through-hole may be in a range of about 5mm to about 8mm.

In one embodiment, the active material layer may further include conductive particles dispersed within the binder.

In one embodiment, the conductive particle may include at least one of carbon black, acetylene black, VGCF (vapor grown carbon fiber), CNT, and graphene.

In one embodiment, an adhesive layer may be formed between the second layer and the current collector.

In one embodiment, the adhesive layer may be a mixture of a polymer resin and a conductor or a conductive polymer resin.

In one embodiment, the polymer resin may include one of SBR (styrene butadiene rubber), CMC (carboxy methylcellulose), silicone rubber, and butadiene rubber.

In one embodiment, the electrode material for a secondary battery may further include a protective layer formed over the first layer.

In one embodiment, the electrode material for a secondary battery may further include a release film attached on the protective layer.

In one embodiment, a thickness of the protective layer may be about 1µm to about 10µm.

In one embodiment, a thickness of the release film may be about 2 to about 4 times the thickness of the protective layer.

In one embodiment, the protective layer may include a thermosetting resin or a thermoplastic resin.

A method of manufacturing an electrode material for a secondary battery according to an exemplary embodiment of the present invention includes preparing a raw material, preparing a binding sheet including a plurality of through-holes, impregnating the raw material into a first surface, a second surface opposite to the first surface, and the through-holes of the binding sheet, to form a first layer, a second layer, and a connecting layer connecting the first layer and the second layer, and attaching a release film and a current collector to the first layer and the second layer, respectively.

In one embodiment, preparing a raw material may include mixing active material powder and binder powder at a high temperature, and pulverizing lumped mixture at room temperature.

In one embodiment, mixing active material powder and binder powder at a high temperature may be performed at a temperature range of about 100°C to about 200°C.

In one embodiment, the active material powder may be a negative electrode material including at least one of carbon, silicon, tin, antimony, and graphene, or a positive electrode material including at least one of aluminum (Al), nickel (Ni), titanium (Ti), tungsten (W), iron (Fe), and chromium (Cr).

In one embodiment, the binder powder may include at least one of PVDF (polyvinylidene fluoride), elastomer, SBR (styrene butadiene rubber), CMC (carboxy methylcellulose), NBR (nitrile butadiene rubber), butadiene, and PAA (polyacrylic acid).

In one embodiment, when mixing active material powder and binder powder at a high temperature, conductive powder including at least one of carbon black, acetylene black, VGCF (vapor grown carbon fiber), CNT, and graphene may be further mixed.

In one embodiment, the binding sheet may be one of a woven fabric, a knitted fabric, a non-woven fabric, and a film.

In one embodiment, an electrolyte absorbency of the binding sheet may be in a range of about 1.2cc/g to about 1.8cc/g.

In one embodiment, the binding sheet may be cotton, synthetic fiber, or a combination thereof.

In one embodiment, impregnating the raw material into a first surface, a second surface opposite to the first surface, and the through-holes of the binding sheet, to form a first layer, a second layer, and a connecting layer connecting the first layer and the second layer may include introducing the raw material between a first roller and a second roller, and between a third roller and a fourth roller, and introducing the binding sheet between the second roller and the third roller. The first roller rotates clockwise, the second roller is adjacent to the first roller and rotates counterclockwise, the third roller is adjacent to the second roller and rotates clockwise, and the fourth roller is adjacent to the third roller and rotates counterclockwise.

In one embodiment, the raw material that has passed between the first roller and the second roller may be attached to a surface of the second roller and rotate, and may be attached to the first surface of the binding sheet, and the raw material that has passed between the third roller and the fourth roller may be attached to the surface of the third roller and rotate, and may be attached to the second surface of the binding sheet.

In one embodiment, surfaces of the second roller and the third roller may be formed to be rougher than those of the first roller and the fourth roller.

In one embodiment, a coating layer may be formed on surfaces of the first roller and the fourth roller to prevent adhesion of the raw material.

In one embodiment, attaching a release film and a current collector to the first layer and the second layer, respectively, may include applying a first adhesive to a surface of the release film, applying a second adhesive to a surface of the current collector or the second layer, and roll-pressing the release film, the binding sheet impregnated with the raw material, and the current collector.

In one embodiment, the first adhesive may include a thermosetting resin or a thermoplastic resin, and the second adhesive may include a mixture of a polymer resin including one of SBR (styrene butadiene rubber), CMC (carboxy methylcellulose), silicone rubber and butadiene rubber, and a conductor, or a conductive polymer resin.

In one embodiment, a thickness of the first adhesive may be about 1µm to about 10µm.

In one embodiment, a thickness of the release film may be about 2 to about 4 times the thickness of the first adhesive.

A method of manufacturing an electrode material for a secondary battery according to an exemplary embodiment of the present invention includes mixing active material powder and binder powder at a high temperature, pulverizing a lumped mixture at room temperature to form a raw material, impregnating the raw material into a first surface, a second surface opposite to the first surface, and a plurality of through-holes of a binding sheet including the through-holes, to form a first layer, a second layer, and a connecting layer connecting the first layer and the second layer, applying a first adhesive to a surface of a release film, applying a second adhesive to a surface of a current collector or the second layer, and roll-pressing the release film, the binding sheet impregnated with the raw material, and the current collector.

According to the electrode material for a secondary battery and the method of manufacturing the electrode material according to the present invention, a film-type binding sheet acts as a binder instead of a conventional dry powder-type binder. That is, the binding sheet plays a role in binding expansion and contraction of lithium during charging and discharging. Therefore, the manufacturing process may be simplified, and cracks caused by external impact may be reduced.

### BRIEF DESCRIPTION OF THE DRAWINGS

FIG. 1 is a cross-sectional view of an electrode material for a secondary battery according to an exemplary embodiment of the present invention.
FIG. 2 is an actual photograph of the electrode material for a secondary battery illustrated in FIG. 1.
FIG. 3 is a flow chart illustrating a method of manufacturing the electrode material for a secondary battery illustrated in FIG. 1.
FIG. 4 is a flow chart illustrating an embodiment of step S 110 illustrated in FIG. 3.
FIG. 5 is a flow chart illustrating an embodiment of step S130 illustrated in FIG. 3.
FIG. 6 is a schematic view illustrating the processes in FIG. 5.
FIG. 7 is a flow chart illustrating an embodiment of step S140 illustrated in FIG. 3.
FIG. 8 is a schematic view illustrating the process of step S143 illustrated in FIG. 7.

### DETAILED DESCRIPTION OF THE ILLUSTRATED EMBODIMENTS

The present invention is described more fully hereinafter with reference to the accompanying drawings, in which example embodiments of the present invention are shown. The present invention may, however, be embodied in many different forms and should not be construed as limited to the example embodiments set forth herein. Rather, these example embodiments are provided so that this disclosure will be thorough and complete, and will fully convey the scope of the present invention to those skilled in the art. In the drawings, the sizes and relative sizes of layers and regions may be exaggerated for clarity.

It will be understood that, although the terms first, second, etc. may be used herein to describe various elements, these elements should not be limited by these terms. These terms are only used to distinguish one element from another element. For example, a first element discussed below could be termed a second element, and similarly, a second element may also be termed a first element, without departing from the teachings of the present invention.

The terminology used herein is for the purpose of describing particular example embodiments only and is not intended to be limiting of the present invention. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, components, and/or groups thereof but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs.

It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, embodiments of the present invention will be described in more detail with reference to the drawings.

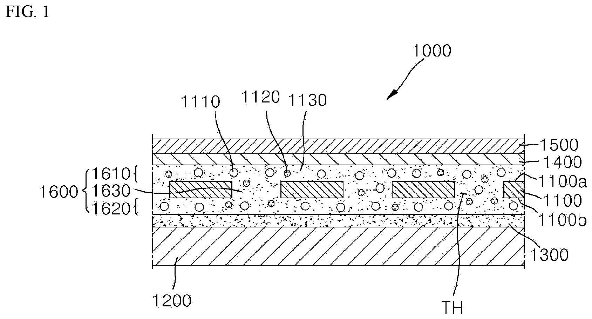

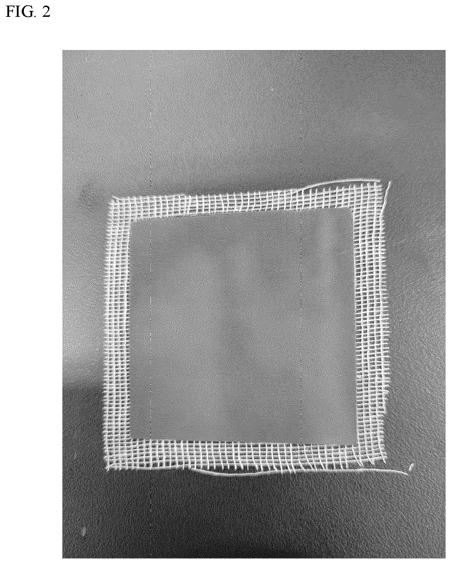

FIG. 1 is a cross-sectional view of an electrode material for a secondary battery according to an exemplary embodiment of the present invention. FIG. 2 is an actual photograph of the electrode material for a secondary battery illustrated in FIG. 1.

Referring to FIG. 1, an electrode material 1000 for a secondary battery according to an exemplary embodiment of the present invention includes a binding sheet 1100, an active material layer 1600, and a current collector 1200.

The binding sheet 1100 includes a plurality of through-holes TH penetrating a first surface 1100a and a second surface 1100b opposite to each other. In one embodiment, the binding sheet 1100 may be one of a woven fabric, a knitted fabric, a non-woven fabric, and a film. In this way, when the binding sheet 1100 uses a material with good moisture absorbency of a cloth type, electrolyte of a secondary battery is easily absorbed, and the insertion and de-insertion of lithium ions are easily facilitated. Accordingly, the performance of the electrode material may be improved. In one embodiment, the electrolyte absorbency of the binding sheet 1100 may be in a range of about 1.2cc/g to about 1.8cc/g.

In addition, the binding sheet 1100 may prevent active material particles inside the active material layer 1600 from being damaged during a roll pressing process. In particular, active material particles of positive electrode material are more easily damaged than active material particles of negative electrode material during the roll pressing process, but the binding sheet 1100 acts as a buffer to prevent the damage of the active material particles.

In one embodiment, the binding sheet 1100 may be cotton, synthetic fiber, or a combination thereof.

In one embodiment, the binding sheet 1100 may be at least one of PVDF (polyvinylidene fluoride), PTFE (polytetrafluoroethylene), PP (polypropylene), PE (polyethylene), PVC (polyvinyl chloride), nylon, cotton, and synthetic fiber.

In one embodiment, the binding sheet 1100 may include one of PVDF (polyvinylidene fluoride) and PTFE (polytetrafluoroethylene), and the binding sheet 1100 may be treated with a sodium naphthalene solution. In this way, by spraying the sodium series in a liquid form, the surface of fluoropolymers including non-adhesive materials such as PTFE, PFA, FEP, ETFE, PCTFE, and PVDF may be modified to increase heterogeneous bonding strength.

In one embodiment, a size of the through-hole TH may be in a range of about 1mm to about 10mm. Preferably, when the diameter of the active material particle to be described later is about 10µm or less, the size of the through-hole TH may be in a range of about 1mm to about 5mm, and when the diameter of the active material particle is about 10µm to about 30µm, the size of the through-hole TH may be in a range of about 5mm to about 8mm.

The active material layer 1600 includes a first layer 1610 covering the first surface 1100a, a second layer 1620 covering the second surface 1100b, and a connecting layer 1630 formed inside the through-hole TH to connect the first layer 1610 and the second layer 1620. In this way, the connecting layer 1630 connects the first layer 1610 and the second layer 1620, so that the first layer 1610 and the second layer 1620 may be more strongly fastened to the binding sheet 1100.

In one embodiment, a thickness of the first layer 1610 and a thickness of the second layer 1620 are substantially the same, and a ratio of the thickness of the first layer 1610 to the thickness of the binding sheet 1100 may be in a range of about 0.5:1 or about 1:1. When the thickness of the first layer 1610 or the second layer 1620 is too thin, the efficiency may be low, and conversely, when the thickness of the first layer 1610 or the second layer 1620 is too thick, it may break.

In one embodiment, the active material layer 1600 may include an active material particle 1110 and a binder 1120. In addition, in one embodiment, the active material layer 1600 may further include conductive particles 1130 dispersed within the binder 1120.

In one embodiment, the active material particle 1110 may be a negative electrode material including at least one of carbon, silicon, tin, antimony, and graphene. In this case, the current collector 1200 may be a copper (Cu) foil.

In one embodiment, the active material particle 1110 may be a positive electrode material including at least one of aluminum (Al), nickel (Ni), titanium (Ti), tungsten (W), iron (Fe), chromium (Cr), an alloy thereof and combinations thereof. In this case, the current collector 1200 may be an aluminum (Al) foil.

In one embodiment, the binder 1120 may include at least one of PVDF (polyvinylidene fluoride), elastomer, SBR (styrene butadiene rubber), CMC (carboxy methylcellulose), NBR (nitrile butadiene rubber), butadiene, PAA (polyacrylic acid).

In one embodiment, the conductive particle 1130 may include at least one of carbon black, acetylene black, VGCF (vapor grown carbon fiber), CNT, and graphene.

The current collector 1200 is attached to the second layer 1620. Thus, an adhesive layer 1300 may be formed between the second layer 1620 and the current collector 1200.

In one embodiment, the adhesive layer 1300 may be a mixture of a polymer resin and a conductor or a conductive polymer resin. In one embodiment, the polymer resin 1300 may include one of SBR (styrene butadiene rubber), CMC (carboxy methylcellulose), silicone rubber, and butadiene rubber.

The electrode material 1000 for a secondary battery may further include a protective layer 1400 formed over the first layer 1610.

In one embodiment, the electrode material 1000 for a secondary battery may further include a release film 1500 attached on the protective layer 1400. For example, as the release film 1500, a low-priced PET film may be employed. When the release film 1500 is supplied to a secondary battery manufacturer and the secondary battery manufacturer removes the release film 1500, the adhesive strength of the PET is low, so that only the release film 1500 may be easily removed without peeling off the protective layer 1400.

The protective layer 1400 protects the surface of the first layer 1610. When the active material layer 1600 is formed by a wet process, after the binder is completely dissolved by the solvent, the solvent is evaporated so that the binder 1120 binds the active material particle 1110 and the conductive particle 1130. Thus, the binder 1120 completely envelops the active material particle 1110 and the conductive particle 1130, and accordingly, the bonding force between the particles becomes stronger.

However, in case of a dry process as in the present invention, since binder powder is partially melted by heat and then dried, the active material layer 1600 is relatively weaker than in a wet process. In particular, the active material layer 1600 becomes more vulnerable and may be easily damaged when exposed to the electrolyte inside the secondary battery.

In order to solve this problem, in the present invention, the protective layer 1400 covers and protects the first layer 1610 constituting the active material layer 1600.

In one embodiment, the thickness of the protective layer 1400 may be about 1µm to about 10µm. When the thickness of the protective layer 1400 is too thin, the first layer 1610 is hard to protect, and conversely, when the thickness of the protective layer 1400 is too thick, the electrolyte of the secondary battery has difficulty in penetrating, so that the electrode material may not perform role thereof.

In one embodiment, a thickness of the release film 1500 may be about 2 to about 4 times the thickness of the protective layer 1400. When the release film 1500 becomes too thick, the bonding strength between the protective layer 1400 and the first layer 1610 deteriorates in a roll-pressing process of the manufacturing process to be described later. In more detail, in order to control the thickness of the protective layer 1400, the protective layer 1400 is not formed directly on the first layer 1610, but is applied to the release film 1500 and cured, and then the release film 1500 is pressed so that the protective layer 1400 is transferred from the release film 1500 to the upper portion of the first layer 1610. Herein, the release film 1500, having an elastic material, absorbs the pressing of the roll, so that the protective layer 1400 is not pressed against the first layer 1610.

Meanwhile, the protective layer 1400 may include a thermosetting resin or a thermoplastic resin. In one embodiment, the protective layer 1400 may be formed of a thermosetting epoxy resin.

In FIG. 2, it may be confirmed that gauze is used as the binding sheet 1100, and the first layer 1610 is formed on the upper surface of the gauze.

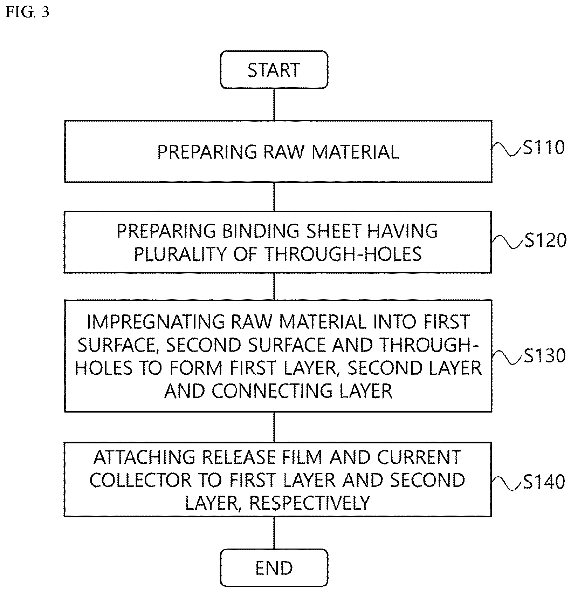

FIG. 3 is a flow chart illustrating a method of manufacturing the electrode material for a secondary battery illustrated in FIG. 1.

Referring to FIG. 3, a method of manufacturing an electrode material for a secondary battery according to an exemplary embodiment of the present invention includes preparing a raw material in step S110, preparing a binding sheet including a plurality of through-holes in step S120, impregnating the raw material into a first surface, a second surface opposite to the first surface, and the through-holes of the binding sheet, to form a first layer, a second layer, and a connecting layer connecting the first layer and the second layer in step S130, and attaching a release film and a current collector to the first layer and the second layer, respectively in step S140.

The order of preparing a raw material in step S110 and preparing a binding sheet including a plurality of through-holes in step S120 may be changed or performed simultaneously.

Hereinafter, each step will be described in more detail.

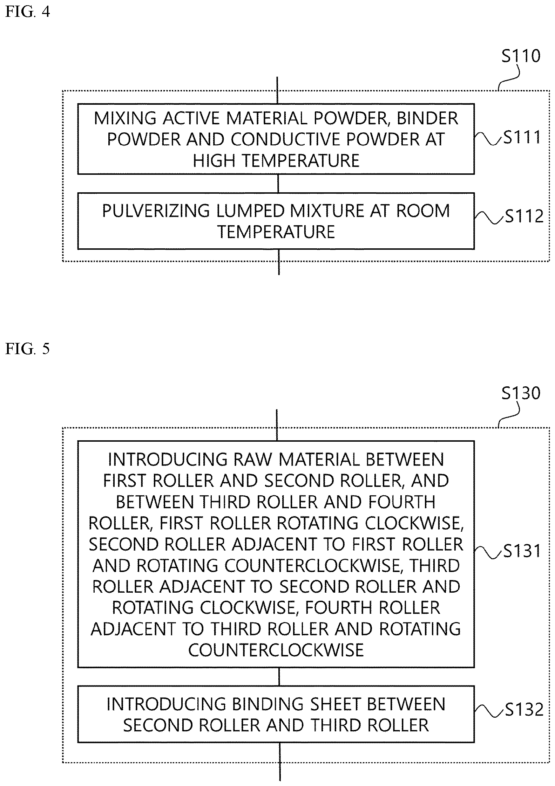

FIG. 4 is a flow chart illustrating an embodiment of step S110 illustrated in FIG. 3.

Referring to FIGS. 3 and 4, preparing a raw material in step S110 may include mixing active material powder and binder powder at a high temperature in step S111, and pulverizing lumped mixture at room temperature in step S112. Meanwhile, when mixing active material powder and binder powder at a high temperature, conductive powder including at least one of carbon black, acetylene black, VGCF (vapor grown carbon fiber), CNT and graphene, may be further mixed.

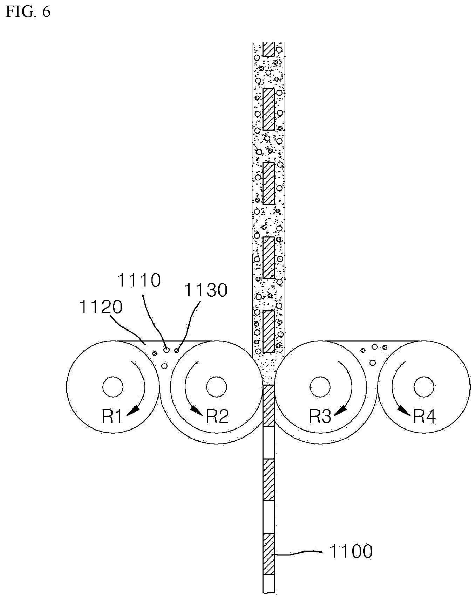

In one embodiment, mixing the active material powder and binder powder at a high temperature in step S111 may be performed at a temperature range of about 100°C to about 200°C. At such a high temperature, the binder is partially dissolved and attached to the particles of the active material powder and conductive particles to form lumps, and then, the lumps are pulverized again to form a raw material and then fed into a roller to be described with reference to FIG. 6. It is also possible to mix and inject active material powder, conductive powder, and binder powder into the roller, but when performing a process as in Fig. 4, since conductive material is pre-bonded to a certain degree with the binder, the binding force in pores may be strengthened compared with injecting the active material powder, the conductive powder, and the binder powder into the pores in a mixed state.

As described above, in one embodiment, the active material powder may be a negative electrode material including at least one of carbon, silicon, tin, antimony, and graphene, or a positive electrode material including at least one of aluminum (Al), nickel (Ni), titanium (Ti), tungsten (W), iron (Fe), and chromium (Cr).

In addition, the binder powder may include at least one of PVDF (polyvinylidene fluoride), elastomer, SBR (styrene butadiene rubber), CMC (carboxy methylcellulose), NBR (nitrile butadiene rubber), butadiene, and PAA (polyacrylic acid).

In addition, as described above, the binding sheet may be one of a woven fabric, a knitted fabric, a non-woven fabric, and a film. In one embodiment, the electrolyte absorbency of the binding sheet may be in a range of about 1.2cc/g to about 1.8cc/g. In one embodiment, the binding sheet may be cotton, a synthetic fiber, or a combination thereof.

FIG. 5 is a flow chart illustrating an embodiment of step S130 illustrated in FIG. 3.

Referring to FIGS. 3 and 5, impregnating the raw material into a first surface, a second surface opposite to the first surface, and the through-holes of the binding sheet, to form a first layer, a second layer, and a connecting layer connecting the first layer and the second layer in step S130 may include introducing the raw material between a first roller and a second roller, and between a third roller and a fourth roller in step S131, and introducing the binding sheet between the second roller and the third roller in step S132. The first roller rotates clockwise, the second roller is adjacent to the first roller and rotates counterclockwise, the third roller is adjacent to the second roller and rotates clockwise, and the fourth roller is adjacent to the third roller and rotates counterclockwise. The order of the steps S131 and S132 may be changed, or performed simultaneously.

Herein, the raw material that has passed between the first roller and the second roller may be attached to a surface of the second roller and rotate, thereby being attached to the first surface of the binding sheet, and the raw material that has passed between the third roller and the fourth roller may be attached to the surface of the third roller and rotate, thereby being attached to the second surface of the binding sheet.

Hereinafter, these processes will be described in more detail with reference to FIG. 6.

FIG. 6 is a schematic view illustrating the processes in FIG. 5.

Referring to FIG. 6, the equipment for performing impregnating the raw material into the first surface and the second surface opposite to the first surface of the binding sheet to form the first layer and the second layer in step S130 includes four rollers.

The first roller R1 rotates, for example, in a clockwise direction. The second roller R2 is arranged adjacent to the first roller R1 and rotates, for example, in a counterclockwise direction. The third roller R3 is arranged adjacent to the second roller R2 and rotates, for example, in a clockwise direction. The fourth roller R4 is arranged adjacent to the third roller R3 and rotates, for example, in a counterclockwise direction.

The raw material manufactured through the process in FIG. 4 is fed between the first roller R1 and the second roller R2, and between the third roller R3 and the fourth roller R4. Herein, the first to fourth rollers R1, R2, R3 and R4 are at high temperatures, so that the binder 1120 of the raw material is partially melted and discharged between the rollers in a sheet shape.

Meanwhile, the sheet manufactured by inserting the raw material between the first roller R1 and the second roller R2 is attached to the surface of the second roller R2 and rotates along the second roller R2. Similarly, the sheet manufactured by inserting the raw material between the third roller R3 and the fourth roller R4 is attached to the surface of the third roller R3 and rotates along the third roller R3.

Herein, the binding sheet 1100 is inserted from the bottom into between the second roller R2 and the third roller R3, and while exiting the second roller R2 and the third roller R3, the raw material sheet attached to the surfaces of the second roller R2 and the third roller R3 and the binding sheet 1100 are combined.

In this way, the surfaces of the second roller R2 and the third roller R3 may be formed to be rougher than those of the first roller R1 and the fourth roller R4 so that the raw material sheet may be attached to the surfaces of the second roller R2 and the third roller R3, respectively. In addition, in one embodiment, a coating layer may be formed on the surfaces of the first roller R1 and the fourth roller R4 to prevent adhesion of the raw material.

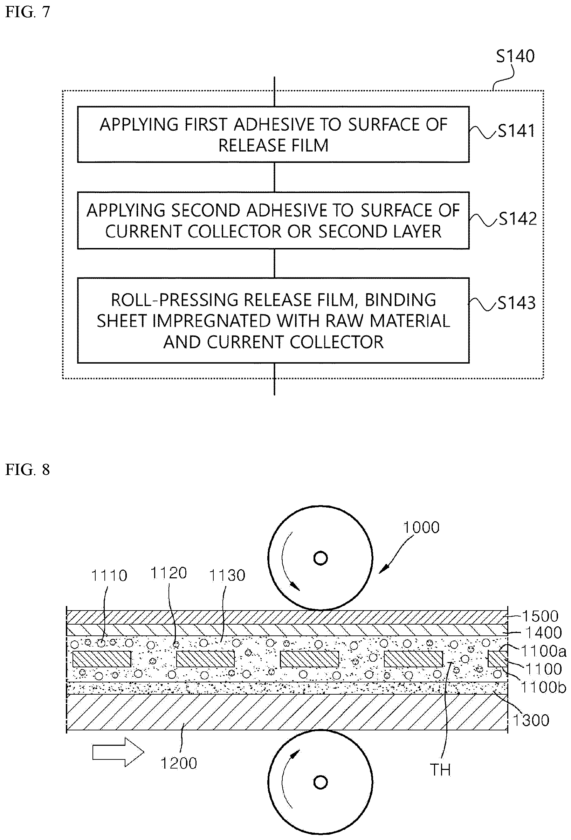

FIG. 7 is a flow chart illustrating an embodiment of step S140 illustrated in FIG. 3. FIG. 8 is a schematic view illustrating the process of step S143 illustrated in FIG. 7.

Referring to FIG. 3 and FIG. 7, attaching a release film and a current collector to the first layer and the second layer, respectively, in step S140 may include applying a first adhesive to a surface of the release film in step S141, applying a second adhesive to a surface of the current collector or the second layer in step S142, and roll-pressing the release film, the binding sheet impregnated with the raw material, and the current collector in step S143.

In one embodiment, the first adhesive may include a thermosetting resin or a thermoplastic resin, and the second adhesive may include a mixture of a polymer resin including one of SBR (styrene butadiene rubber), CMC (carboxy methylcellulose), silicone rubber and butadiene rubber, and a conductor, or a conductive polymer resin.

The first adhesive manufactured in this manner functions as the protective layer 1400 in FIG. 1 after curing, and the second adhesive functions as the adhesive layer 1300 in FIG. 1 after curing.

In one embodiment, the thickness of the first adhesive may be about 1µm to about 10µm. As described above, the first adhesive is not applied to the first layer, but is applied to the release film, semi-cured, and then completely cured after attachment to the first layer, which is to control the thickness of the first adhesive. That is, since the surface of the first layer may have a plurality of grooves formed thereon and may also have unevenness, even though a certain amount of the adhesive is applied, the control of the thickness may not be easy due to absorption into the first layer. Accordingly, in the present invention, the first adhesive is applied to the release film having a smooth surface.

Afterwards, as shown in FIG. 8, the first adhesive and the second adhesive are cured by pressing the current collector and the release film with a roller through roll pressing. Meanwhile, as described above, the thickness of the release film may be about 2 to about 4 times the thickness of the first adhesive. When the release film becomes too thick, the release film has a large buffering effect, making it difficult to effectively transmit the roll pressing.

According to the electrode material for a secondary battery and the method of manufacturing the electrode material according to the present invention, a film-type binding sheet acts as a binder instead of a conventional dry powder-type binder. That is, the binding sheet plays a role in binding expansion and contraction of lithium during charging and discharging. Therefore, the manufacturing process may be simplified, and cracks caused by external impact may be reduced.

It will be apparent to those skilled in the art that various modifications and variation may be made in the present invention without departing from the spirit or scope of the invention. Thus, it is intended that the present invention cover the modifications and variations of this invention provided they come within the scope of the appended claims and their equivalents.

## Claims

1. An electrode material for a secondary battery, comprising:
a binding sheet including a plurality of through-holes penetrating the first surface and the second surface, which are opposite to each other;
an active material layer including a first layer covering the first surface, a second layer covering the second surface, and a connecting layer formed inside the through-hole and connecting the first layer and the second layer; and
a current collector attached to the second layer,
wherein the binding sheet includes one of PVDF (polyvinylidene fluoride) and PTFE (polytetrafluoroethylene), and the binding sheet is treated with a sodium naphthalene solution.

2. The electrode material for a secondary battery of claim 1, wherein a size of the through-hole is in a range of about 1mm to about 10mm.

3. The electrode material for a secondary battery of claim 1, wherein thickness of the first layer and thickness of the second layer are substantially the same, and a ratio of the thickness of the first layer and thickness of the binding sheet is in a range of about 0.5:1 to about 1:1.

4. The electrode material for a secondary battery of claim 1, wherein the active material layer includes an active material particle and a binder,
wherein the active material particle includes at least one of carbon, silicon, tin, antimony, and graphene, and
the current collector is copper (Cu) foil.

5. The electrode material for a secondary battery of claim, wherein the active material layer includes an active material particle and a binder,
wherein the active material particle is a positive electrode material including one of aluminum (Al), nickel (Ni), titanium (Ti), tungsten (W), iron (Fe), chromium (Cr), alloys thereof, and combinations thereof, and
the current collector is aluminum (Al) foil.

6. The electrode material for a secondary battery of claim 1, further comprising a protective layer formed over the first layer.

7. A method of manufacturing an electrode material for a secondary battery, comprising:
preparing a raw material;
preparing a binding sheet including a plurality of through-holes;
impregnating the raw material into a first surface, a second surface opposite to the first surface, and the through-holes of the binding sheet, to form a first layer, a second layer, and a connecting layer connecting the first layer and the second layer; and
attaching a release film and a current collector to the first layer and the second layer, respectively.

8. The method of claim 7, wherein preparing a raw material includes:
mixing active material powder and binder powder at a high temperature; and
pulverizing lumped mixture at room temperature.

9. The method of claim 7, wherein impregnating the raw material into a first surface, a second surface opposite to the first surface, and the through-holes of the binding sheet, to form a first layer, a second layer, and a connecting layer connecting the first layer and the second layer, comprises:
introducing the raw material between a first roller and a second roller, and between a third roller and a fourth roller, the first roller rotating clockwise, the second roller adjacent to the first roller and rotating counterclockwise, the third roller adjacent to the second roller and rotating clockwise, the fourth roller adjacent to the third roller and rotating counterclockwise; and
introducing the binding sheet between the second roller and the third roller.

10. The method of claim 9, wherein the raw material that has passed between the first roller and the second roller is attached to a surface of the second roller and rotates, and is attached to the first surface of the binding sheet, and the raw material that has passed between the third roller and the fourth roller is attached to the surface of the third roller and rotates, and is attached to the second surface of the binding sheet.

11. The method of claim 9, wherein surfaces of the second roller and the third roller are formed to be rougher than those of the first roller and the fourth roller.

12. The method of claim 9, wherein a coating layer is formed on surfaces of the first roller and the fourth roller to prevent adhesion of the raw material.

13. The method of claim 7, wherein attaching a release film and a current collector to the first layer and the second layer, respectively, comprises:
applying a first adhesive to a surface of the release film;
applying a second adhesive to a surface of the current collector or the second layer; and
roll-pressing the release film, the binding sheet impregnated with the raw material, and the current collector.

14. The method of claim 13, wherein the first adhesive comprises a thermosetting resin or a thermoplastic resin, and the second adhesive comprises a mixture of a polymer resin including one of SBR (styrene butadiene rubber), CMC (carboxy methylcellulose), silicone rubber and butadiene rubber, and a conductor, or a conductive polymer resin.

15. The method of claim 13, wherein a thickness of the first adhesive is about 1µm to about 10µm, and
a thickness of the release film is about 2 to about 4 times the thickness of the first adhesive.
